# EUROPÄISCHE PATENTSCHRIFT

(11) **EP 2 537 770 B1**
(45) Veröffentlichungstag und Bekanntmachung des Hinweises auf die Patenterteilung: **01.06.2016**
(21) Anmeldenummer: 12172618.6
(22) Anmeldetag: 19.06.2012
(51) Int. Cl.: B65D 30/08, B32B 5/18, B32B 27/00

(54) **VERWENDUNG EINER BEUTELVERPACKUNG ZUR VERPACKUNG VON STÜCKIGEM ODER KÖRNIGEM SCHÜTTGUT**
USE OF A BAG PACKAGING FOR PACKAGING LUMP OR GRANULAR BULK GOODS
UTILISATION D'UN EMBALLAGE DE SAC POUR L'EMBALLAGE DE PRODUITS EN VRAC EN FORME DE PIÈCES OU DE GRAINES

(30) Priorität: 20.06.2011 DE 102011051193
(43) Veröffentlichungstag der Anmeldung: 26.12.2012
(73) Patentinhaber: Mondi Consumer Packaging Technologies GmbH, 48599 Gronau (DE)
(72) Erfinder: Perick, Matthias, 48683 Ahaus-Altstätte (DE)
(74) Vertreter: Albrecht, Rainer Harald

(56) Entgegenhaltungen:
- EP-A1- 0 822 063
- EP-A1- 1 787 799
- EP-A1- 2 258 545
- US-A- 3 619 344

## Beschreibung

Die Erfindung betrifft die Verwendung einer durch Falten einer mehrschichtigen Folie geformten Beutelverpackung zur Verpackung von stückigem oder körnigem Schüttgut. Die Beutelverpackung weist nach ihrer Befüllung einen durch die Folienfaltung bestimmte Außenkontur mit Folienflächen und Außenkanten auf, wobei sich das Verpackungsgut nicht an den Folienflächen abzeichnet.

Die Verpackung kann insbesondere aus einem Seitenfaltenbeutel bestehen, der durch Siegelnähte versteifte Längskanten aufweist und nach seiner Befüllung durch eine Kopfsiegelnaht zu einer Verpackung mit einem im Wesentlichen quaderförmigen Füllgutraum verschließbar ist. Der Seitenfaltenbeutel eignet sich insbesondere für große Füllmengen und kann beispielsweise zur Verpackung von Trockenfutter für Tiere eingesetzt werden. Die Beutelverpackung kann ferner als Standbodenbeutel ausgebildet sein, der zwei durch Längssiegelnähte verbundene Frontflächen sowie einen nach innen gefalteten Folienboden aufweist und nach seiner Befüllung durch eine die Frontflächen verbindende Kopfsiegelnaht verschließbar ist. Eine solche Beutelverpackung hat ein geringeres Füllvolumen und eignet sich beispielsweise für stückige Lebensmittel.

Viele trockene Tierfuttersorten weisen bröckchenartige bzw. körnige Bestandteile mit teilweise scharfkantiger Struktur auf. Diese drücken sich durch ein dünnes Verpackungsmaterial durch, was zu einer unebenen Oberfläche auf der Außenseite der Verpackung führt. Aus ästhetischen Gründen wird dies als störend empfunden. Bei dünnen Verpackungsmaterialien kann die Verpackung auch durchstoßen werden. Außerdem wird die gewünschte Formstabilität und Standfestigkeit der Verpackung häufig nicht erreicht. Zur Herstellung standfester Beutelverpackungen für stückiges und körniges Schüttgut werden daher in der Praxis verhältnismäßig dicke Verpackungsmaterialien eingesetzt.

Aus JP 2007/230637 A ist ein Beutel aus einem mehrschichtigen Folienlaminat bekannt, dessen beutelinnenseitige Schicht aus einer geschäumten Polyolefinschicht besteht. Die geschäumte Polymerschicht verbessert den Widerstand gegen Durchstoßen. Das Folienlaminat wird insbesondere zur Verwendung von Beuteln für Infusionslösungen verwendet.

Die Druckschrift JP 2004/091024 A betrifft eine Vakuumverpackung aus einer mehrschichtigen Folie, die sich nach einer Evakuierung des Füllgutraumes an das Füllgut fest anlegt, wobei sich die Kontur des Füllgutes auf der Folie abzeichnet. Bei dem Füllgut kann es sich um körnige Feststoffe, z. B. Granulate handeln. Der Schichtenaufbau der als Vakuumverpackung verwendeten Folie umfasst eine Siegelschicht, eine Barriereschicht, eine Außenschicht sowie eine geschäumte Schicht zwischen der Außenschicht und der Barriereschicht.

Die Druckschrift CA 1 145 724 A bezieht sich auf eine Vakuumverpackung zur Verpackung von Fleisch, welches nicht vom Knochen abgelöst ist. In Bereichen der Verpackung, welche mit den Knochen in Kontakt kommen, ist eine geschäumte Schutzfolie vorgesehen, die ein Durchstoßen der äußeren Verpackungsumhüllung verhindern soll.

Die Druckschrift EP 2 258 545 A1 offenbart die Verwendung einer Beutelverpackung zur Verpackung von Tiernahrung oder Lebensmitteln, wobei die Beutelverpackung aus einem mehrschichtigen Folienlaminat besteht, das eine geschäumte Polymerschicht aufweist.

Geschäumte Folien und mehrschichtige Folien, die eine Schaumschicht als Zwischenschicht oder innenliegende Schicht aufweisen, sind für Beutelverpackungen, die nach ihrer Befüllung eine durch die Folienfaltung bestimmte Außenkontur mit ebenen Folienflächen und Außenkanten aufweisen, nicht in Betracht gezogen worden. Vor diesem Hintergrund liegt der Erfindung die Aufgabe zugrunde, bei einer Beutelverpackung für körniges oder stückiges Schüttgut den Polymereinsatz zu reduzieren und eine Beutelverpackung anzugeben, die bei geringem Flächengewicht der Folie eine gute Formstabilität aufweist und sich durch eine hohe mechanische Festigkeit auszeichnet. Daher soll sich das Verpackungsgut an den Folienflächen nicht abzeichnen.

Gegenstand der Erfindung und Lösung dieser Aufgabe ist die Verwendung einer durch Falten einer mehrschichtigen Folie geformten Beutelverpackung zur Verpackung von stückigem oder körnigem Schüttgut nach Anspruch 1. Die Beutelverpackung weist nach ihrer Befüllung eine durch die Folienfaltung bestimmte Außenkontur mit Folienflächen und Außenkanten auf, wobei die Außenkanten zweckmäßig durch Siegelnähte versteift sind. Die Beutelverpackung kann insbesondere aus einem Seitenfaltenbeutel bestehen, der durch Siegelnähte versteifte Längskanten aufweist und nach seiner Befüllung durch eine Kopfsiegelnaht zu einer Verpackung mit einem im Wesentlichen quaderförmigen Füllgutraum verschlossen wird. Die Beutelverpackung in der Form eines Seitenfaltenbeutels wird vorzugsweise zur Verpackung von Trockenfutter für Tiere, insbesondere grobstückigem, pelletiertem oder körnigem Trockenfutter, verwendet.

Im Rahmen der Erfindung liegt es auch, dass die Beutelverpackung aus einem Standbodenbeutel besteht, der zwei durch Längssiegelnähte verbundene Frontflächen sowie einen nach innen gefalteten Folienboden aufweist und nach seiner Befüllung durch eine die Frontflächen verbindende Kopfsiegelnaht verschlossen wird. Die Beutelverpackung in der Ausführungsform als Standbeutel weist ein geringeres Füllvolumen auf und wird im Rahmen der erfindungsgemäßen Lehre vorzugsweise zur Verpackung von stückigen Lebensmitteln verwendet.

Die Beutelverpackung kann vorgefertigt oder alternativ in einer Abfüllanlage geformt, befüllt und verschlossen werden.

Die Folie, aus der die Beutelverpackung einteilig geformt wird, weist für die erfindungsgemäße Anwendung eine Dichte von 0,5 g/cm³ bis 0,9 g/cm³ auf, wobei der Schichtenaufbau der Folie eine bedruckbare Außenschicht an der Verpackungsaußenseite, eine Siegelschicht aus einem siegelfähigen Polymer an der Verpackungsinnenseite sowie eine aufgeschäumte Polymerschicht umfasst. Die aufgeschäumte Polymerschicht ist zwischen der Siegelschicht und der Außenschicht angeordnet, wobei die Siegelschicht als porenfreie Polymerschicht ausgebildet ist. Die Folie kann ein Flächengewicht zwischen 30g/m² und 150 g/m² aufweisen, wobei ein Flächengewicht zwischen 50 g/m² und 100 g/m² bevorzugt ist. Die aufgeschäumte Polymerschicht weist für die erfindungsgemäße Verwendung zweckmäßig eine Schichtdicke zwischen 20 µm und 200 µm, insbesondere eine Schichtdicke zwischen 50 µm und 100 µm auf.

Die aufgeschäumte Polymerschicht wird durch einen physikalischen Prozess hergestellt. Beim physikalischen Schäumen wird ein Treibmittelgas, insbesondere N₂ oder CO₂, der aufgeschmolzene Kunststoffmasse unter hohem Druck zugegeben. Das Treibmittel liegt vor dem Zudosieren als überkritisches Fluid vor, welches die Inkompressibilität einer Flüssigkeit und die Lösungseigenschaft eines Gases vereint. Das Treibmittel geht mit der Polymerschmelze in Lösung und bildet dort feinstverteilt ein Einphasensystem mit der Kunststoffschmelze. Durch einen schnellen Druckabfall beim Austritt aus der Extrusionsdüse bilden sich in der Polymerschmelze Nukleierungskeime. Das Gas löst sich kontrolliert aus der Schmelze heraus, wobei eine Schaumstruktur ausgebildet wird. Durch Druck und Temperatur kann der Prozess kontrolliert werden. Das Verfahren wird unter anderem in US 6 051 174 beschrieben.

Die aufgeschäumte Polymerschicht der erfindungsgemäß verwendeten Folie weist eine durch physikalisches Aufschäumen erzeugte Mikrozellenstruktur auf. Die Mikrozellenstruktur ist charakterisiert durch eine Porenstruktur mit einer mittleren Porengröße von weniger als 100 µm, wobei die Porengröße auch im Bereich zwischen 0,1 µm und 10 µm liegen kann. Aufgrund der Schaumstruktur weist die erfindungsgemäße Folie ein Flächengewicht auf, welches deutlich geringer ist als das Flächengewicht einer aus demselben Polymer gefertigten, porenfreien Folie gleicher Dicke. Die Schaumstruktur der Folie verhindert ein Durchdrücken des Füllgutes, welches bröckchenartige und körnige Bestandteile mit scharfkantigen Strukturen aufweisen kann. Ein aus der Folie gefertigter Seitenfaltenbeutel, der durch Siegelnähte versteifte Längskanten aufweist, zeichnet sich trotz des geringen Flächengewichtes der Folie durch eine hohe Formstabilität und Standfestigkeit aus. Ferner wird durch die mikrozellige Schaumstruktur, die sich durch eine gleichmäßige Zellstruktur auszeichnet, eine bessere Festigkeit erreicht und sind Dickenschwankungen geringer. Da die aufgeschäumte Polymerschicht keine oder allenfalls nur wenige größere Poren enthält, sind keine Schwachstellen vorhanden, die einen Angriffspunkt für bröckchenartige und körnige Bestandteile mit scharfkantigen Strukturen bilden könnten.

Erfindungsgemäß ist die Außenschicht der Folie auf einer mehrschichtigen Polyethylenfolie aufgebracht, die eine aufgeschäumte Kernschicht und beidseits der Kernschicht ungeschäumte Poly-ethylenschichten aufweist. Während die aufgeschäumte Kernschicht eine Schichtdicke von 30 µm bis 100 µm aufweisen kann, weisen die beidseits angeordneten ungeschäumten Polyethylenschichten eine geringe Schichtdicke auf, die zweckmäßig zwischen 5 µm und 40 µm gewählt wird. Die mehrschichtige Polyethylenfolie kann insbesondere aus PE-LD, PE-LLD oder einer Mischung aus PE-LD und PE-LLD bestehen und weist vorzugsweise eine Dichte zwischen 0,6 g/cm³ und 0,8 g/cm³ auf. Die Polymermischung der Polyethylenfolie kann auch PE-ULD, PE-VLD und PE-HD enthalten. Ein Zusatz von Polypropylen soll ebenfalls nicht ausgeschlossen sein.

Das Polymergerüst der aufgeschäumten Polymerschicht enthält anorganische Nukleierungsmittel, z. B. in Form von Talkum. Der Einsatz von Nukleierungsmittel führt zu kleineren und gleichmäßigeren Zellgrößen der Schaumstruktur.

Für die Außenschicht der erfindungsgemäßen verwendeten Folie können im Verpackungsbereich übliche Polymere eingesetzt werden, die sich gut bedrucken lassen und eine hochwertige Oberfläche bilden. Geeignet sind insbesondere Polyester, BOPP sowie auch Polyolefine, insbesondere Polyethylen.

Zwischen der Außenschicht und der aufgeschäumten Polymerschicht kann ferner eine Barriereschicht, insbesondere eine Schicht aus einem metallisierten Polymer, angeordnet sein.

Im Folgenden werden Ausführungsbeispiele der Erfindung anhand von Zeichnungen erläutert.

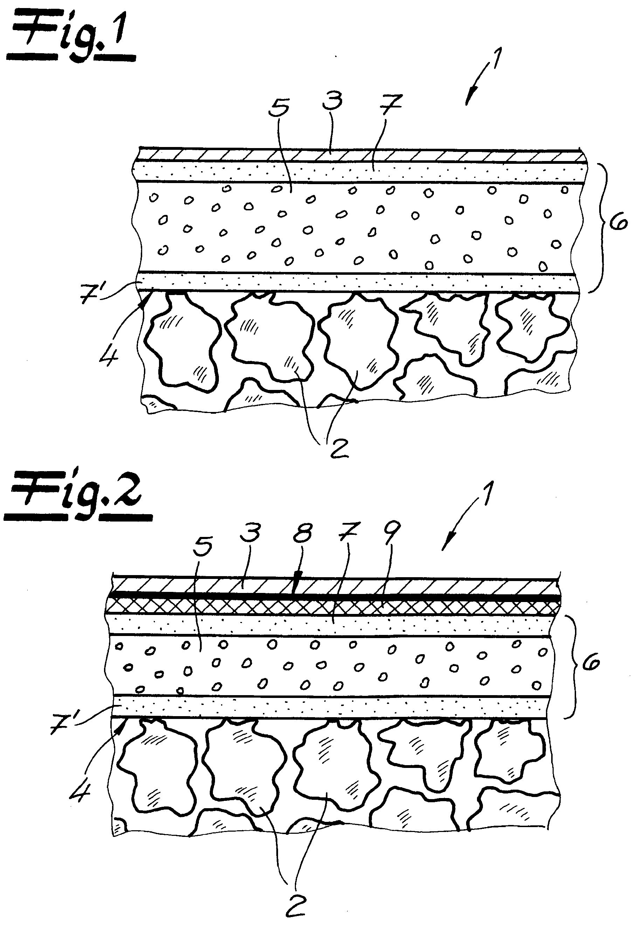

Die Fig. 1 zeigt einen Schnitt durch die Wand einer aus einer mehrschichtigen Folie 1 gebildeten Beutelverpackung, die zur Verpackung von stückigem und körnigen Schüttgut 2 eingesetzt wird. Bei dem Schüttgut 2 handelt es sich insbesondere um Trockenfutter für Tiere, welches bröckchenartige bzw. körnige Bestandteile mit scharfkantigen Strukturen enthält. Die Beutelverpackung ist durch Falten der Folie geformt und weist eine durch die Folienfaltung bestimmte Außenkontur mit ebenen Folienflächen und Außenkanten auf. Die Außenkanten sind vorzugsweise durch Siegelnähte versteift. Nach der Befüllung wird die Beutelverpackung durch eine Kopfsiegelnaht verschlossen.

Der Schichtenaufbau der mehrschichtigen Folie 1 umfasst eine bedruckbare Außenschicht 3 an der Verpackungsaußenseite, eine Siegelschicht 4 aus einem siegelfähigen Polymer an der Verpackungsinnenseite sowie eine aufgeschäumte Polymerschicht 5. Durch die aufgeschäumte Polymerschicht 5 weist die Folie 1 eine Dichte zwischen 0,5 g/cm³ und 0,9 g/cm³ auf, wobei eine Dichte zwischen 0,6 g/cm³ und 0,8 g/cm³ bevorzugt ist. Das Flächengewicht der Folie liegt zwischen 30 g/m² und 150 g/m², insbesondere zwischen 50 g/m² und 100 g/m².

Der Schichtendarstellung in Fig. 1 entnimmt man, dass die Außenschicht 3 auf einer mehrschichtigen Polyethylenfolie 6 aufgebracht ist, die eine aufgeschäumte Polymerschicht 5 als Kernschicht und beidseits der Kernschicht ungeschäumte Polyethylenschichten 7, 7' aufweist. Die Polyethylenschicht 7' bildet zugleich die Siegelschicht. Die aufgeschäumte Polymerschicht 5 weist eine durch physikalisches Aufschäumen erzeugte Mikrozellenstruktur auf. Beim physikalischen Aufschäumen wird der Polymerschmelze ein Treibmittel, vorzugsweise Stickstoff oder CO₂, zugegeben. Das Treibmittel liegt unter hohem Druck als überkritisches Fluid vor, welches mit der Polymerschmelze vollkommen in Lösung geht und feinstverteilt ein Einphasensystem mit der Kunststoffschmelze bildet. Durch einen schnellen Druckabfall während der Extrusion bilden sich Nukleierungskeime, wobei das Gas sich kontrolliert aus der Schmelze heraus löst und eine Mikrozellenstruktur entsteht. Der Prozess kann so gesteuert werden, dass die Mikrozellenstruktur sich aus Poren zusammensetzt, deren Porengröße weniger als 100 µm beträgt, wobei die Porengröße auch im Bereich zwischen 0,1 µm bis 10 µm sein kann. Ein Zusatz von Nukleierungsmitteln, z. B. in Form von Talkum, führt zu kleineren und gleichmäßigeren Zellgrößen. Das Polymergerüst der aufgeschäumten Polymerschicht 5 enthält daher auch anorganische Nukleierungsmittel, die zur Verbesserung des Schäumungsprozesses der Polymerschmelze zugegeben werden.

Die mehrschichtige Polyethylenfolie 6 kann aus PE-LD, PE-LLD oder einer Mischung aus PE-LD und PE-LLD bestehen und weist eine mittlere Dichte zwischen 0,6 g/cm³ und 0,8 g/cm³ auf. Das Polymergerüst der aufgeschäumten Polymerschicht 5 enthält zusätzlich anorganische Nukleierungsmittel, die zur Verbesserung des Schäumungsprozesses der Polymerschmelze zugegeben werden. Der Zusatz von Nukleierungsmitteln führt zu kleineren und gleichmäßigeren Zellgrößen des Schaums.

Die aufgeschäumte Polymerschicht weist eine Schichtdicke zwischen 30 µm und 100 µm auf. Die Außenschicht besteht vorzugsweise aus Polyester, BOPP oder einem Polyethylen.

Im Ausführungsbeispiel der Fig. 2 ist zwischen der Außenschicht 3 und der aufgeschäumten Polymerschicht 5 noch eine Barriereschicht 8 vorgesehen. Die Barriereschicht 8 ist eine aluminiumbedampfte Schicht auf einer Trägerfolie 9, z. B. aus einem Polyester (PET). Die Barriereschicht kann auch aus EVOH oder einem Polyamid bestehen. Eine aus Druckfarben bestehende Druckschicht und Klebstoffschichten aus einem Kaschierklebstoff wurden in der Figur nicht dargestellt.

### Beispiele:

### Beispiel 1:

Eine mehrschichtige Folie mit dem in Fig. 1 dargestellten Schichtenaufbau weist eine 12 µm dicke Außenschicht aus Polyethylenterephthalat (PET) auf, die durch ein Laminierverfahren auf eine 125 µm dicke geschäumte Polyethylenfolie aufgebracht ist. Die Polyethylenfolie weist ein Flächengewicht von 78 g/m² sowie eine Dichte von 0,6240 g/cm³ auf. Die geschäumte Polyethylenfolie ist mehrschichtig ausgebildet und weist eine aufgeschäumte Kernschicht aus PE-LD und PE-LLD sowie beidseitig der Kernschicht angeordnete ungeschäumte, 20 µm dicke Polyethylenschichten ebenfalls aus PE-LLD und PE-LD auf. Die geschäumte Kernschicht wurde physikalisch unter Verwendung von N₂ als Treibmittelgas von 40 µm auf 85 µm aufgeschäumt. Sie hat eine Mikrozellenstruktur und enthält anorganische Nukleierungsmittel, die der Polymerschmelze zur Verbesserung des Schäumungsprozesses zugesetzt werden. Das Nukleierungsmittel besteht aus Talkum, welches beispielsweise in einer Menge von 15 Gew.-% bezogen auf das Polymer der geschäumten Kernschicht eingesetzt wird.

Die beschriebene Folie ersetzt eine zum Vergleich herangezogene Standardfolie, die eine 12 µm dicke Außenschicht aus PET sowie eine 120 µm dicke mehrschichtige Polyethylenfolie mit einem Flächengewicht von 113,34 g/m² oder eine Dichte von 0,9445 g/cm³ aufweist.

### Beispiel 2:

Die erfindungsgemäße Folie weist einen in Fig. 2 dargestellten Schichtenaufbau auf. Der Schichtenaufbau umfasst eine 12 µm dicke Außenfolie aus Polyethylentherephtalat (PET), eine 12 µm dicke Barriereschicht aus einem metallisierten Polyester (PET met) sowie eine 100 µm dicke geschäumte Polyethylenfolie. Die Polyethylenfolie ist dreischichtig und weist eine geschäumte Kernschicht sowie beidseitig der Kernschicht angeordnete ungeschäumte PE-Schichten auf. Sowohl für die Kernschicht als auch für die ungeschäumten Randschichten wird eine Mischung aus PE-LD und PE-LLD eingesetzt. Die randseitigen Schichten weisen eine Schichtdicke von 20 µm auf. Die Kernschicht wurde mittels N₂ als Treibmittel von 40 µm auf 60 µm aufgeschäumt. Das Polymergerüst der aufgeschäumten Kernschicht enthält anorganische Nukleierungsmittel, welche in einer Menge von 15 Gew.-% bezogen auf das Polymer der Kernschicht zugesetzt wurde und aus Talkum besteht. Die aufgeschäumte Polyethylenfolie weist eine Dichte von 0,72 g/cm³ sowie ein Flächengewicht von 72 g/m² auf.

Die erfindungsgemäße Folie ersetzt ein zum Vergleich herangezogenes Laminat mit dem Schichtenaufbau 12 µm PET/12 µm PET met/100 µm PE, wobei als Polyethylen eine Mischung aus PE-LLD und PE-LD verwendet wird. Die zum Vergleich herangezogene Folie hat ein Flächengewicht von 92,91 g/m² sowie eine Dichte von 0,9291 g/cm³.

### Beispiel 3:

Das Ausführungsbeispiel betrifft ein Laminat mit einer 20 µm dicken Außenschicht aus BOPP sowie einer 67 µm dicken geschäumten PE-Folie. Die geschäumte PE-Folie weist eine 41 µm dicke geschäumte Kernschicht sowie jeweils 13 µm dicke ungeschäumte Polyethylenschichten beidseits der Kernschicht auf. Die Kernschicht wurde durch Zusatz von N₂ als Treibmittel von 27 µm auf 41 µm expandiert. Sämtliche Schichten der PE-Folie bestehen aus PE-LLD und PE-LD, wobei der Kernschicht ein anorganisches Nukleierungsmittel zur Verbesserung der Mikrozellenstruktur zugesetzt wurde. Die geschäumte PE-Folie weist ein Flächengewicht von 48 g/m² sowie eine Dichte von 0,7164 g/cm³ auf.

Das erfindungsgemäße Laminat ersetzt eine Folie mit einer Außenschicht aus 20 µm BOPP und einer 50 µm dicken PE-Schicht, wobei die PE-Folie ein Flächengewicht von 48,47 g/m² sowie eine Dichte von 0,9694 g/cm³ aufweist. Bei gleichem Materialeinsatz an Polyethylen weist die erfindungsgemäße Folie eine wesentlich höhere Folienstärke auf, wodurch sich die Formstabilität der aus der Folie hergestellten Verpackung verbessert.

### Beispiel 4:

Das Ausführungsbeispiel betrifft einen Laminat mit einer 20 µm dicken Außenschicht aus BOPP und einer 50 µm dicken geschäumten Polyethylenfolie. Die PE-Folie weist eine 30 µm dicke geschäumte Kernschicht sowie 10 µm dicke ungeschäumte PE-Schichten beidseits der Kernschicht auf. Sämtliche Schichten bestehen aus PE-LLD und PE-LD, wobei die Polymermatrix der Kernschicht zusätzlich anorganisches Nukleierungsmittel enthält, die der Polymerschmelze zur Verbesserung des Schäumungsprozesses zugeführt wurden. Das Aufschäumen erfolgte unter Verwendung von Stickstoff als Treibmittel.

Die Folie ersetzt ohne Qualitätsverlust ein Laminat mit einer Außenschicht aus BOPP (20 µm) sowie einer 50 µm dicken PE-Trägerschicht. Durch die Schaumstruktur könnte mit geringerem PE-Materialeinsatz die gleichen Folienstärke realisiert werden.

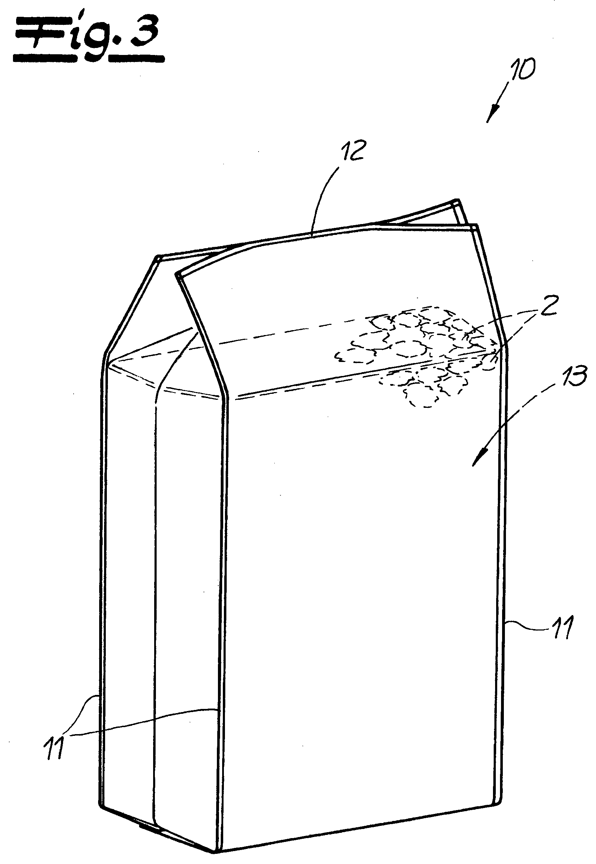

Aus den in den Beispielen 1 bis 4 beschriebenen Folien können Seitenfaltenbeutel 10 hergestellt werden, die durch Siegelnähte versteifte Längskanten 11 aufweisen und nach ihrer Befüllung mit dem Füllgut 2 durch eine Kopfsiegelnaht 12 zu einer Verpackung mit einem im Wesentlichen quaderförmigen Füllgutraum 13 verschlossen werden. Die Verpackungen sind zur Verpackung von Tiertrockenfutter geeignet. Sie sind formstabil, standfest und reißfest. Das verpackte Erzeugnis ist in Fig. 3 beispielhaft dargestellt.

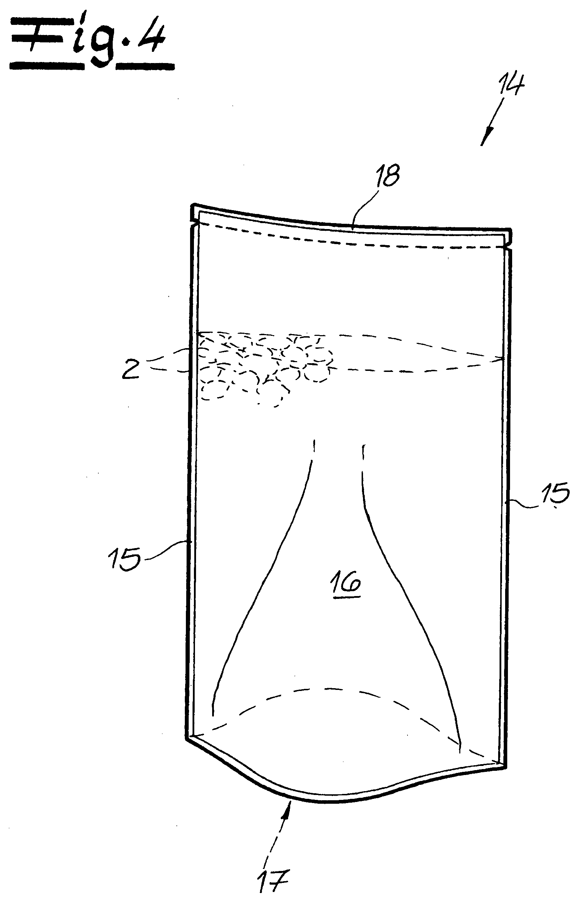

Die Fig. 4 zeigt eine Ausführungsvariante der Erfindung, bei der die Beutelverpackung des verpackten Erzeugnisses aus einem Standbodenbeutel 14 besteht, der zwei durch Längssiegelnähte 15 verbundene Frontflächen 16 sowie einen durch eine Bodenfalte gebildeten Folienboden 17 aufweist und nach der Befüllung durch eine die Frontflächen 16 verbindende Kopfsiegelnaht 18 verschlossen wird. Der Standbodenbeutel 14 weist ein geringeres Füllvolumen auf, als der in Fig. 3 dargestellte Seitenfaltenbeutel 10 und eignet sich daher insbesondere für Verpackungen von stückigen Lebensmittelerzeugnissen, z. B. Geflügelteilen.

Gegenstand der Erfindung ist auch die Verwendung einer mehrschichtigen Folie mit den zuvor beschriebenen und in den Patentansprüchen angegebenen Merkmalen zur Herstellung einer Beutelverpackung für stückiges oder körniges Schüttgut, die nach der Befüllung eine Außenkontur mit ebenen Folienflächen und Außenkanten aufweist.

## Patentansprüche

1. Verwendung einer durch Falten einer mehrschichtigen Folie geformten Beutelverpackung, die nach ihrer Befüllung eine durch die Folienfaltung bestimmte Außenkontur mit Folienflächen und Außenkanten aufweist, zur Verpackung von stückigem oder körnigem Schüttgut (2), mit der Maßgabe, dass die Folie (1) eine Dichte von 0,5 g/cm³ bis 0,9 g/cm³ aufweist, dass der Schichtenaufbau der Folie (1) eine bedruckbare Außenschicht (3) an der Verpackungsaußenseite, eine Siegelschicht (7') aus einem siegelfähigen Polymer an der Verpackungsinnenseite sowie eine aufgeschäumte Polymerschicht (5) umfasst, dass die aufgeschäumte Polymerschicht (5) eine durch physikalisches Aufschäumen erzeugte Mikrozellenstruktur aufweist, wobei das Polymergerüst der aufgeschäumten Polymerschicht anorganische Nukleierungsmittel enthält und dass die Außenschicht (3) auf einer mehrschichtigen Polyethylenfolie (6) aufgebracht ist, die die aufgeschäumte Polymerschicht (5) als Kernschicht und beidseits der Kernschicht ungeschäumte Polyethylenschichten (7, 7') aufweist.

2. Verwendung einer Beutelverpackung nach Anspruch 1 zur Verpackung von Trockenfutter für Tiere, insbesondere grobstückigem, pelletiertem oder körnigem Trockenfutter.

3. Verwendung einer Beutelverpackung nach Anspruch 1 zur Verpackung von stückigen Lebensmitteln.

4. Verwendung einer Beutelverpackung nach einem der Ansprüche 1 bis 3, mit der Maßgabe, dass die Folie (1) ein Flächengewicht zwischen 30 g/m² und 150 g/m² aufweist.

5. Verwendung einer Beutelverpackung nach einem der Ansprüche 1 bis 4, **dadurch gekennzeichnet, dass** die mehrschichtige Polyethylenfolie (6) aus PE-LD, PE-LLD oder einer Mischung aus PE-LD und PE-LLD besteht und eine Dichte zwischen 0,6 g/cm³ und 0,8 g/cm³ aufweist.

6. Verwendung einer Beutelverpackung nach einem der Ansprüche 1 bis 5, mit der Maßgabe, dass die aufgeschäumte Polymerschicht (5) eine Schichtdicke von 20 µm bis 200 µm aufweist.

7. Verwendung einer Beutelverpackung nach einem der Ansprüche 1 bis 6, mit der Maßgabe, dass die Außenschicht (3) aus Polyester, BOPP oder einem Polyolefin besteht.

8. Verwendung einer Beutelverpackung nach einem der Ansprüche 1 bis 7, mit der Maßgabe, dass zwischen der Außenschicht (3) und der aufgeschäumten Polymerschicht (5) eine Barriereschicht (8), insbesondere eine Schicht aus einem metallisierten Polymer, angeordnet ist.

9. Verwendung einer Beutelverpackung nach einem der Ansprüche 1 bis 8, mit der Maßgabe, dass die Außenkanten durch Siegelnähte versteift sind.

10. Verwendung einer Beutelverpackung nach einem der Ansprüche 1 bis 8, mit der Maßgabe, dass die Beutelverpackung aus einem Seitenfaltenbeutel (10) besteht, der durch Siegelnähte versteifte Längskanten (11) aufweist und nach seiner Befüllung durch eine Kopfsiegelnaht (12) zu einer Verpackung mit einem im Wesentlichen quaderförmigen Füllgutraum (13) verschließbar ist.

11. Verwendung einer Beutelverpackung nach einem der Ansprüche 1 bis 8, mit der Maßgabe, dass die Beutelverpackung aus einem Standbodenbeutel (14) besteht, der zwei durch Längssiegelnähte (15) verbundene Frontflächen (16) sowie einen nach innen gefalteten Folienboden (17) aufweist und nach seiner Befüllung durch eine die Frontflächen (16) verbindende Kopfsiegelnaht (18) verschließbar ist.

12. Verwendung einer Beutelverpackung nach einem der Ansprüche 1 bis 8, mit der Maßgabe, dass die Beutelverpackung in einer Abfüllanlage geformt, befüllt und verschlossen wird.

## Claims

1. A use of a pouch packaging formed by folding a multilayer film, which packaging, after filling, comprises an outer contour defined by the folding of the film with film surfaces and outer edges, for packing chunky or granular bulk material (2), with the proviso that the film (1) comprises a thickness of 0.5 g/cm³ to 0.9 g/m³, that the layered structure of the film (1) comprises a printable outer layer (3) on the outside of the packaging, a sealing layer (7') from a sealable polymer on the inside of the packaging as well as a foamed-on polymer layer (5), in that the foamed-on polymer layer (5) comprises a micro-cell structure produced by physical foaming, wherein the polymer structure of the foamed-on polymer layer contains inorganic nucleating agents and in that the outer layer (3) is applied to a multi-layer polyethylene film (6), which comprises the foamed-on polymer layer (5) as core layer and unfoamed polyethylene layers (7, 7') on both sides of the core layer.

2. The use of a pouch packaging according to claim 1 for packaging dried food for animals, in particular chunky, pelletised or granular dried food.

3. The use of a pouch packaging according to claim 1 for packaging chunky foodstuffs.

4. The use of a pouch packaging according to one of claims 1 to 3, with the proviso that the film (1) comprises a weight per unit area between 30 g/m² and 150 g/m².

5. The use of a pouch packaging according to one of claims 1 to 4, **characterised in that** the multi-layer polyethylene film (6) consists of PE-LD, PE-LLD or a mixture of PE-LD and PE-LLD and has a thickness between 0.6 g/m³, and 0.8 g/m³.

6. The use of a pouch packaging according to one of claims 1 to 5, with the proviso that the foamed-on polymer layer (5) has a layer thickness of 20 µm to 200 µm.

7. The use of a pouch packaging according to one of claims 1 to 6, with the proviso that the outer layer (3) consists of polyester, BOPP or a polyolefin.

8. The use of a pouch packaging according to one of claims 1 to 7, with the proviso that a barrier layer (8), in particular a layer from a metallised polymer, is arranged between the outer layer (3) and the foamed-on polymer layer (5).

9. The use of a pouch packaging according to one of claims 1 to 8, with the proviso that the outer edges are stiffened by sealing seams.

10. The use of a pouch packaging according to one of claims 1 to 8, with the proviso that the pouch packaging consists of a side-gusset bag (10), which has longitudinal edges (11) stiffened by sealing seams and, after filling, can be closed by a head sealing seam (12) to form a packaging with an essentially cube-shaped filling material space (13).

11. The use of a pouch packaging according to one of claims 1 to 8, with the proviso that the pouch packaging consists of a stand-up pouch (14), which comprises two front surfaces (16) connected by longitudinal sealing seams (15) and an inwardly folded film floor (17) and which, after filling, can be closed by a head sealing seam (18) connecting the front surfaces (16).

12. The use of a pouch packaging according to one of claims 1 to 8, with the proviso that the pouch packaging is formed, filled and closed in a filling plant.

## Revendications

1. Utilisation d'un emballage sous forme de sachet, façonné par pliage d'un film multicouches, qui après avoir été rempli présente un contour extérieur défini par le pliage du film, avec des surfaces de film et des arêtes extérieures, pour l'emballage d'un produit en vrac (2) en morceaux ou granuleux, avec la consigne que le film (1) présente une densité de 0,5 g/cm³ à 0,9 g/cm³, que la structure des couches du film (1) comprend une couche extérieure (3) imprimable sur la face extérieure de l'emballage, une couche de scellement (7') en un polymère scellable sur la face intérieure de l'emballage, ainsi qu'une couche de polymère (5) expansé, que la couche de polymère (5) expansé comporte une structure en microcellules créée par expansion physique, le squelette polymère de la couche de polymère expansé contenant des produits anorganiques de nucléation et que la couche extérieure (3) est appliquée sur un film de polyéthylène (6) multicouches qui comporte la couche de polymère (5) expansée en tant que couche centrale et des couches de polyéthylène (7, 7') non expansées, de part et d'autre de la couche centrale.

2. Utilisation d'un emballage sous forme de sachet selon la revendication 1 pour emballer du fourrage séché pour animaux, notamment du fourrage en morceaux grossiers, pastillé et/ou granuleux.

3. Utilisation d'un emballage sous forme de sachet selon la revendication 1, pour emballer des produits alimentaires en morceaux.

4. Utilisation d'un emballage sous forme de sachet selon l'une quelconque des revendications 1 à 3, avec la consigne que le film (1) présente un grammage compris entre 30 g/m² et 150 g/m².

5. Utilisation d'un emballage sous forme de sachet selon l'une quelconque des revendications 1 à 4, **caractérisée en ce que** le film de polyéthylène (6) multicouches est constitué de PE-LD, de PE-LLD ou d'un mélange de PE-LD et de PE-LLD et présente une densité comprise entre 0,6 g/cm³ et 0,8 g/cm³.

6. Utilisation d'un emballage sous forme de sachet selon l'une quelconque des revendications 1 à 5, avec la consigne que la couche de polymère (5) expansée présente une densité de couche de 20 µm à 200 µm.

7. Utilisation d'un emballage sous forme de sachet selon l'une quelconque des revendications 1 à 6, avec la consigne que la couche extérieure (3) est constituée de polyester, de BOPP ou d'une polyoléfine.

8. Utilisation d'un emballage sous forme de sachet selon l'une quelconque des revendications 1 à 7, avec la consigne qu'entre la couche extérieure (3) et la couche de polymère (5) expansée est placée une couche (8) formant barrière, notamment une couche en un polymère métallisé.

9. Utilisation d'un emballage sous forme de sachet selon l'une quelconque des revendications 1 à 8, avec la consigne que les arêtes extérieures sont renforcées par des joints de scellement.

10. Utilisation d'un emballage sous forme de sachet selon l'une quelconque des revendications 1 à 8, avec la consigne que l'emballage sous forme de sachet est constitué d'un sachet (10) à pli latéral, qui comporte des arêtes longitudinales (11) renforcées par des joints de scellement et après avoir été rempli, peut se refermer par un joint de scellement (12) supérieur en un emballage présentant un espace (13) pour produit sensiblement en forme de parallélépipède.

11. Utilisation d'un emballage sous forme de sachet selon l'une quelconque des revendications 1 à 8 avec la consigne que l'emballage sous forme de sachet est constitué d'un sachet à fond plat (14) qui comporte deux faces frontales (16) reliées par des joints de scellement (15) longitudinaux, ainsi qu'un fond en film (17) replié vers l'intérieur et après avoir été rempli, peut se fermer par un joint de scellement (18) supérieur, reliant les faces frontales (16).

12. Utilisation d'un emballage sous forme de sachet selon l'une quelconque des revendications 1 à 8, avec la consigne qu'on façonne, on remplit et on ferme l'emballage sous forme de sachet dans une installation de remplissage.
